# EUROPEAN PATENT APPLICATION

(11) **EP 4 549 269 A1**
(43) Date of publication of application: **07.05.2025**
(21) Application number: 24209212.0
(22) Date of filing: 28.10.2024
(51) Int. Cl.: B60W 10/18, B60C 99/00, B60W 30/18, B60W 40/06, B60W 40/068, B60W 40/12, B60W 50/00

(54) **ROAD CONDITION PREDICTION METHOD AND SYSTEM**

(30) Priority: 03.11.2023 US 202363595913 P; 12.09.2024 US 202418883107
(71) Applicant: The Goodyear Tire & Rubber Company, Akron, OH 44316 (US)
(72) Inventor: SINGH, Kanwar Bharat, L-7363 Lorentzweiler (LU); SON, Roman, Ettelbruck (LU); SCHAEFER-O`REILLY, Sven, Hollenfels (LU)
(74) Representative: Kutsch, Bernd

(57) **Abstract**

A method is disclosed comprising receiving ambient temperature and relative humidity data from a vehicle (100), the ambient temperature and relative humidity data having been collected by a tire sensor (106) mounted to an exterior of a tire (103) of the vehicle or an exterior of a wheel of the vehicle (100); applying a machine-learning model to the temperature and humidity data from the vehicle (100) to predict a road condition for the vehicle; and sending the road condition for the vehicle to a control system (203) of the vehicle. Also, a system for practicing this method and a non-transitory, computer-readable medium is disclosed.

## Description

### BACKGROUND

Vehicles can be equipped with tire sensors mounted on a tire for each wheel on the vehicle to obtain information regarding physical parameters of the tire, such as, for example, tire pressure, temperature, and the like. The information obtained from the sensors can be used to detect potential issues with the tires that may result in unsafe driving conditions. For example, data obtained from a tire sensor may be used to detect an underinflated tire. Upon detection, the user of the vehicle can be notified of the underinflated tire through an indicator light in the dashboard of the vehicle.

### SUMMARY OF THE INVENTION

The invention relates to a method in accordance with claim 1, to a system in accordance with claim 6 and to a non-transitory, computer-readable medium in accordance with claim 11.

Dependent claims refer to preferred embodiments of the invention.

### BRIEF DESCRIPTION OF THE DRAWINGS

Many aspects of the present disclosure can be better understood with reference to the following drawings. The components in the drawings are not necessarily to scale, with emphasis instead being placed upon clearly illustrating the principles of the disclosure. Moreover, in the drawings, like reference numerals designate corresponding parts throughout the several views.
FIG. 1A is a drawing of a vehicle with one or more tires that include a tread wear sensor plug according to Various embodiments of the present disclosure.
FIG. 1B depicts a cross-sectional view of a tire according to various embodiments of the present disclosure.
FIGS. 2A-2C are network environments according to various embodiments of the present disclosure.
FIG. 3 is a flowchart depicting an example of the operation of one or more components of the network environments of FIGS. 2A-2C according to various embodiments of the present disclosure.

### DEFINITIONS

"CAN bus" is an abbreviation for controller area network.

"Inboard side" means the side of the tire nearest the vehicle when the tire is mounted on a wheel and the wheel is mounted on the vehicle.

### DETAILED DESCRIPTION OF PREFERRED EMBODIMENTS OF THE INVENTION

Disclosed herein are various examples related to non-destructive examination of tires using radar tomography for instance. Reference will now be made in detail to the description of the embodiments as illustrated in the drawings, wherein like reference numbers indicate like parts throughout the several views.

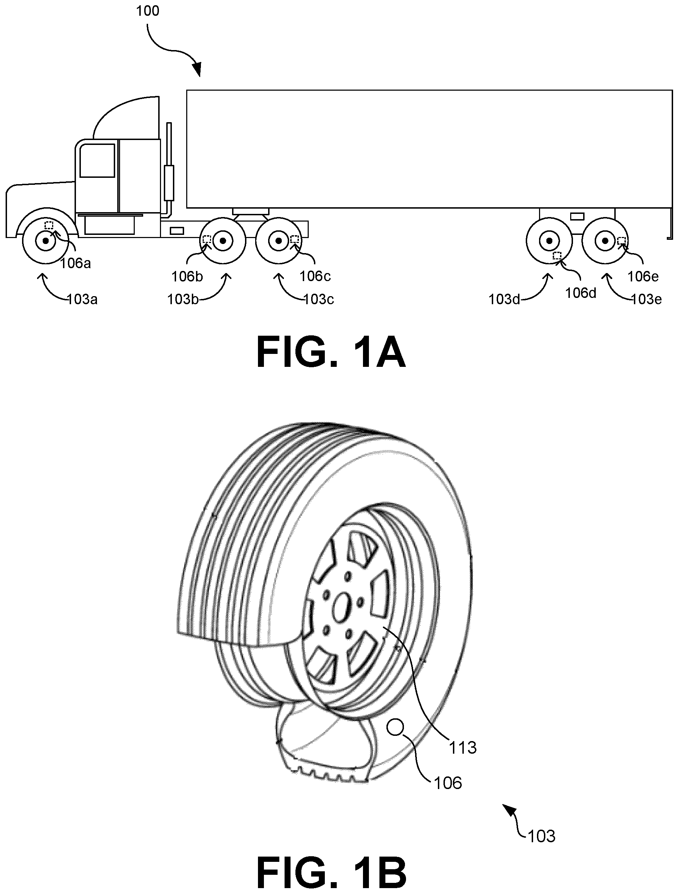

FIG. 1A depicts an example of a vehicle 100 (in this case, a semi-trailer truck with trailer). The vehicle 100 can have one or more tires 103 (such as those tires depicted as tires 103a, 103b, 103c, 103d, and 103e). Each tire 103 can have a tire sensor 106 (such as those tire sensors depicted as tire sensors 106a, 106b, 106c, 106d, and 106e). A tire sensor 106 can include any sensor that is capable of or configured to record ambient air temperature and relative humidity in the vicinity of the tire sensor 106, either continuously or at periodic intervals, and transmit the recorded ambient air temperature and relative humidity to another computing device or system. In some implementations, the tire sensor 106 can be affixed or mounted to an exterior wall of the tire 103 in order to increase the accuracy of readings of ambient conditions such as ambient air temperature and relative humidity. In other implementations, the tire sensor 106 could be affixed or mounted to the inboard side of tire 103 to protect the tire sensor 106 from wear and tear. The tire sensor 106 further can include an antenna (not shown) for wirelessly transmitting measured parameters and tire information data to a remote computing device for analysis.

While the vehicle 100 of FIG. 1A is depicted as a commercial truck, the vehicle 100 can include any type of vehicle that employs tires where the commercial truck is presented as an example. To this end, the vehicle 100 can be include passenger vehicles, off-road vehicles and the like, in which such vehicles 100 include a greater or lesser number of tires 103 than are shown in FIG. 1A.

FIG. 1B illustrates a cross-sectional view of a tire 103 illustrating the tire sensor 106 being mounted to an exterior wall of the tire 103. A tire sensor 106 could be mounted or attached to the exterior wall or external surface of the tire 103 by means such as an adhesive. Although the tire sensor 106 is depicted as being attached to the exterior wall of the tire 103, it is understood that in various embodiments of the present disclosure that the tire sensor 106 could be mounted to other portions of the tire 103, such as the inboard side of the tire 103, on the wheel 113, *etc.* For the purpose of convenience, reference herein shall be made to mounting of the tire sensor 106 to the tire 103, with the understanding that such mounting includes all such types of attachments.

In various examples, the tire sensor 106 comprises a processor and memory to store vehicle tire information for each specific tire 103. For example, the tire vehicle tire information may include a tire identifier (ID), manufacturing information for the tire 103 (e.g., model number, manufacturer name, *etc.),* size information (e.g., rim size, width, and outer diameter), manufacturing location, manufacturing date, a treadcap code that includes or correlates to a compound identification, a mold code that includes or correlates to a tread structure identification, and/or other information. The vehicle tire information may also include a service history or other information to identify specific features and parameters of each tire 103. Alternativity or additionally, the vehicle tire information may be included in another sensor 106, or in a separate vehicle storage medium, such as a tire ID tag, which preferably is in electronic communication with the tire sensor 106.

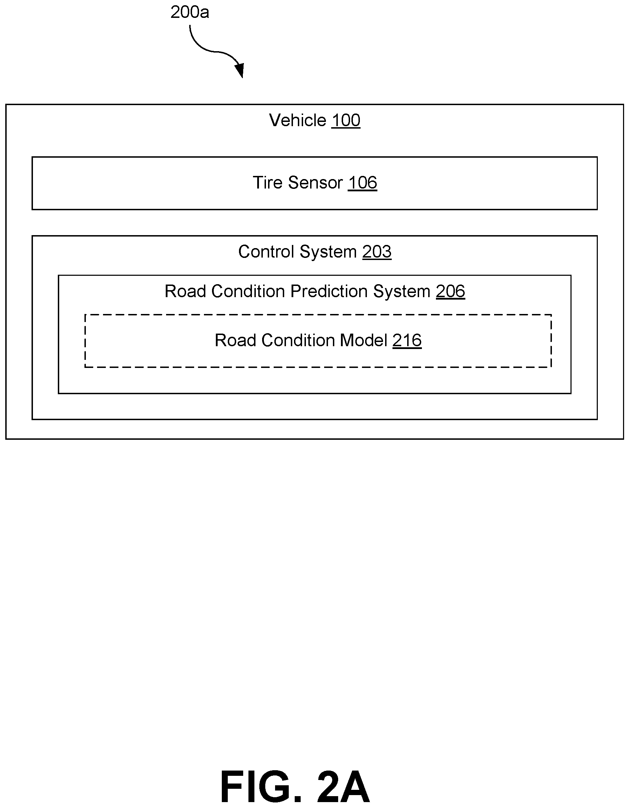

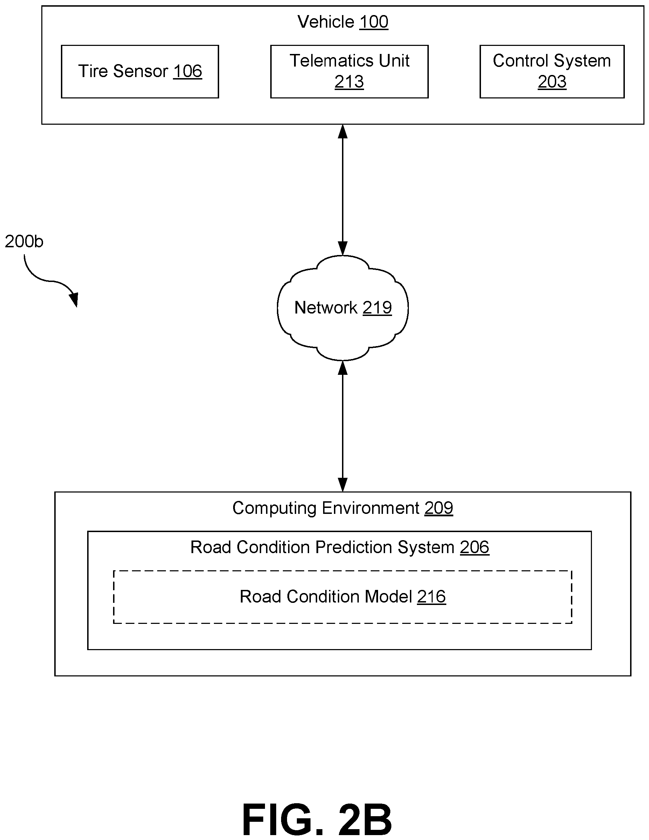

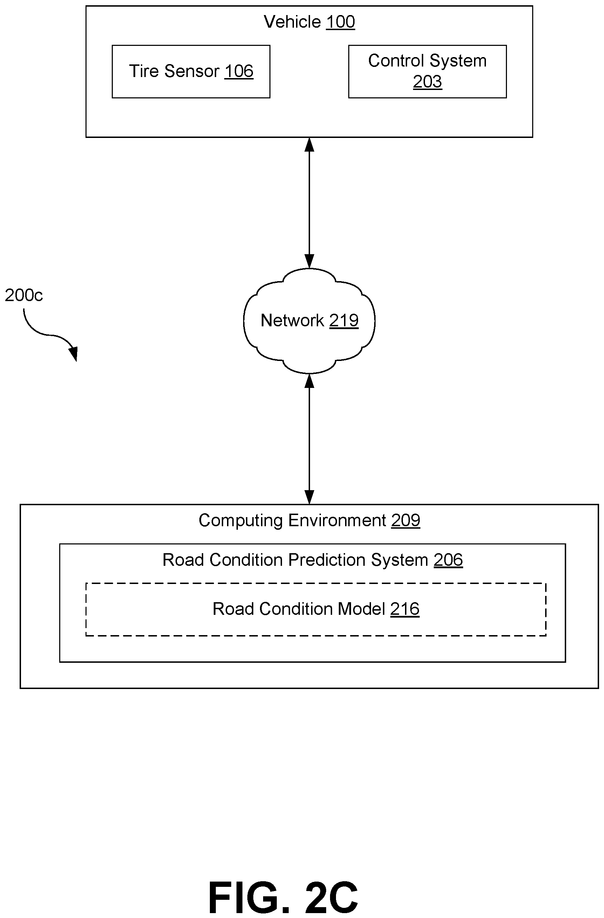

FIGS. 2A - 2C are schematic block diagrams of a network environment 200 (e.g., network environment 200a, network environment 200b, or network environment 200c) according to various embodiments of the present disclosure. For example, FIG. 2A depicts a network environment 200a where the various components, such as the tire sensor(s) 106, control system 203, and/or road condition prediction system 206, are self-contained within the vehicle 100. FIG. 2B depicts a network environment 200b where the components within the vehicle 100 are data communication with a computing environment 209 via a telematics unit 213. FIG. 2C depicts a similar network environment 200c to the network environment 200b. However, with respect to the network environment 200c, the components within the vehicle are in data communication with the computing environment 203 via the control system 206.

The control system 203 can represent any hardware or software system that controls, directly or indirectly, the operation of various components and/or system of the vehicle 100. The control system 203 can be connected to a CAN bus of the vehicle 100 to allow the control system 203 to send to and receive messages from various other components or systems of the vehicle 100.

The road condition prediction system 206 can represent any software application or service, executed locally on the vehicle 100 or remotely in a computing environment 209, that can use the road condition model 216 to predict the current road conditions for the vehicle 100 in response to ambient air temperature and relative humidity readings provided by one or more tire sensors 106 of a vehicle. The current road conditions could then be used as an input for other systems or services of the vehicle 100, such as an anti-lock brake system (ABS), traction control system (TCS), a brake drying system, tire-wear level predictor, *etc.*

The road condition model 216 can represent any machine learning model (e.g., a neural network such as a convolutional neural network, recurrent neural network; a linear regression model; a decision learning tree; *etc.)* that is trained to predict current weather conditions, and therefore current road conditions, in the vicinity of the vehicle 100. For example, the road condition model 216 could be trained on a data set that includes a mapping of historic or collected ambient air temperature and relative humidity to historic or collected weather conditions. Table 1 below lists an example of a training data set for illustrative purposes. More voluminous training data sets may be used in various implementations.

**Table 1:**

| Ambient Air Temperature | Relative Humidity | Weather Condition | Road Condition |
|---|---|---|---|
| 10° C | 28% | Clear | Dry |
| 0° C | 75% | Rainy | Wet |
| -2.2° C | 12% | Clear | Dry |
| 5° C | 45% | Rainy | Wet |
| 20° C | 22% | Clear | Dry |
| 29.4° C | 44% | Clear | Dry |
| -9.4° C | 79% | Snowy | Snowy |
| -11.1° F | 44% | Clear | Dry |
| 24.4° F | 69% | Rainy | Wet |
| 27.8° F | 70% | Rainy | Wet |

The telematics unit 213 can represent any unit that can receive data from various components of the vehicle 100, such as tire sensors 106, and relay the data to another device or component (such as the computing environment 209 or the control system 203). A telematics unit 213 can be installed on the vehicle 100, for example, in order to provide a connection between the tire sensors 106 and the control system 203 or the computing environment 209. The telematics unit 213 could also be installed, for example, when the tire sensors 106 lack access to the CAN bus of the vehicle (e.g., because they are after-market tires instead of original equipment manufacturer (OEM) tires).

The computing environment 209 can include one or more computing devices that include a processor, a memory, and/or a network interface. For example, the computing devices can be configured to perform computations on behalf of other computing devices or applications. As another example, such computing devices can host and/or provide content to other computing devices in response to requests for content.

Moreover, the computing environment 209 can employ a plurality of computing devices that can be arranged in one or more server banks or computer banks or other arrangements. Such computing devices can be located in a single installation or can be distributed among many different geographical locations. For example, the computing environment 209 can include a plurality of computing devices that together can include a hosted computing resource, a grid computing resource or any other distributed computing arrangement. In some cases, the computing environment 209 can correspond to an elastic computing resource where the allotted capacity of processing, network, storage, or other computing-related resources can vary over time.

In the network environment 200a of FIG. 2A, one or more tire sensors 106 and a control system 203 are shown as components of the vehicle 100. The tire sensor(s) 106 can be in data communication with the control system 203, for example, via the CAN bus of the vehicle 100. In these implementations, the tire sensor 106 could include a wireless transmitter (e.g., a BLUETOOTH Low Energy (BLE) transmitter, an ultra-wideband (UWB) transmitter, *etc.)* that allows for the tire sensor 106 to communicate information to a receiver connected to the CAN bus. The receiver could, in turn, relay the ambient air temperature and relative humidity readings provided by the tire sensor(s) 106 to the control system 203 via the CAN bus.

The road condition prediction system 206 of the control system 203 could then use the road condition model 216 to predict the current road condition of the vehicle 100. The resulting road condition could then be used as an input to other systems of the vehicle 100 (e.g., an anti-lock brake system (ABS), traction control system (TCS), a brake drying system, *etc.).* For example, the ABS or TCS could use the predicted current road conditions as a basis for estimating the coefficient between the tires 103 of the vehicle 100 and the road in order to adjust their performance accordingly. The brake drying system could use the predicted road conditions to determine or adjust how frequently it attempts to remove moisture from the brakes of the vehicle 100. Similarly, because tire-wear and tread-wear vary based on road conditions, a tire- or tread-wear predictor could use the predicted road conditions to more accurately estimate the wear on a tire 103 and/or treads of a tire 103.

In the network environment 200b of FIG. 2B, one or more tire sensors 106 and a control system 203 are shown as components of the vehicle 100, as is a telematics unit 213. Embodiments such as those depicted in FIG. 2B can be used in situations where the manufacturer of the tires 106 lacks direct access to the CAN bus of the vehicle 100 (e.g., because the tires are after-market tires for the vehicle 100 rather than original equipment manufacturer (OEM) tires). The telematics unit 213 allows for the vehicle 100 to remain in data communication with the computing environment 209 via the network 219. The tire sensor(s) 106 can include a wireless transmitter (e.g., a BLUETOOTH Low Energy (BLE) transmitter, an ultra-wideband (UWB) transmitter, *etc.)* that allows for the tire sensor 106 to communicate information to the telematics unit 213. The telematics unit 213 can, in turn, relay the ambient air temperature and relative humidity readings provided by the tire sensor(s) 106 to the computing environment 209 via the network 219.

The network 219 can include wide area networks (WANs), local area networks (LANs), personal area networks (PANs), or a combination thereof. These networks can include wired or wireless components or a combination thereof. Wired networks can include Ethernet networks, cable networks, fiber optic networks, and telephone networks such as dial-up, digital subscriber line (DSL), and integrated services digital network (ISDN) networks. Wireless networks can include cellular networks, satellite networks, Institute of Electrical and Electronic Engineers (IEEE) 802.11 wireless networks (i.e., WI-FI^{®}), BLUETOOTH^{®} networks, microwave transmission networks, as well as other networks relying on radio broadcasts. The network 219 can also include a combination of two or more networks 219. Examples of networks 219 can include the Internet, intranets, extranets, virtual private networks (VPNs), and similar networks.

When the road condition prediction system 206 receives the ambient air temperature and relative humidity readings of the tire sensor(s) 106 from the telematics unit 213, the road condition prediction system 206 can use the road condition model 216 to predict the current road condition of the vehicle 100. The road condition prediction system 206 could then return the predicted current road condition to the telematics unit 213, which can relay it to the control system 203 (e.g., via the CAN bus of the vehicle 100).

The control system 203 can then use the resulting road condition as an input to other systems of the vehicle 100 (e.g., an anti-lock brake system (ABS), traction control system (TCS), a brake drying system, *etc.).* For example, the ABS or TCS could use the predicted current road conditions as a basis for estimating the coefficient between the tires 103 of the vehicle 100 and the road in order to adjust their performance accordingly. The brake drying system could use the predicted road conditions to determine or adjust how frequently it attempts to remove moisture from the brakes of the vehicle 100. Similarly, because tire-wear and tread-wear vary based on road conditions, a tire- or tread-wear predictor could use the predicted road conditions to more accurately estimate the wear on a tire 103 and/or treads of a tire 103.

The network environment 200c of FIG. 2C is similar to that of FIG. 2B. However, in the network environment 200c, a telematics unit 213 is not present. Instead, like the network environment 200a of FIG. 2A, the tire sensor(s) 106 are in data communication with the control system 203 via the CAN bus of the vehicle 100. However, unlike the network environment 200a of FIG. 2A, the road condition prediction system 206 is hosted by the computing environment 209. The ambient air temperature and relative humidity detected by the tire sensor(s) 106 and provided to the control system 203 can be sent by the control system 203 to the computing environment 209 for processing by the road condition prediction system 206. The road condition prediction system 206 can apply the road condition model 216 to the ambient air temperature and relative humidity to predict the current road conditions for the vehicle 100. The road condition prediction system 206 can then return the predicted current road condition to the control system 203, which can use the current road condition as an input to other systems of the vehicle 100 (e.g., an anti-lock brake system (ABS), traction control system (TCS), a brake drying system, *etc.).*

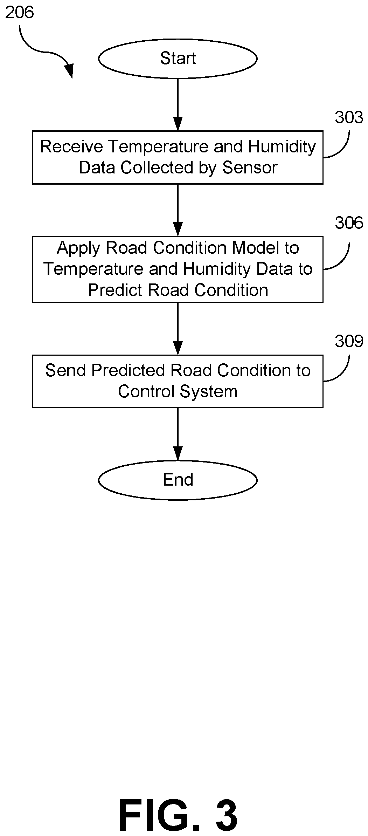

FIG. 3 is a flowchart shown is a flowchart that provides one example of the operation of a portion of the road condition prediction system 206. The flowchart of FIG. 3 provides merely an example of the many different types of functional arrangements that can be employed to implement the operation of the depicted portion of the road condition prediction system 206. As an alternative, the flowchart of FIG. 3 can be viewed as depicting an example of elements of a method implemented within the network environments 200a-c.

Beginning with block 303, the road condition prediction system 206 can receive temperature and humidity data collected from one or more tire sensors 106 of a vehicle 100. In some implementations, only one tire 103 may have a tire sensor 106 installed on the vehicle, while in other implementations, multiple tires 103 may have a tire sensor 106 installed. The temperature and humidity data can represent the ambient temperature and relative humidity in the vicinity of the tire sensor(s) 106.

Moving on to block 306, the road condition prediction system 206 can apply the road condition model 216 to each set or pair of ambient temperature and relative humidity collected by a tire sensor 106. If a single set or pair of readings for ambient temperature and relative humidity is received, then the prediction from the road condition model 216 can be used as the prediction for the current road condition for the vehicle 100. However, if multiple sets or pairs of readings are received, such as separate ambient temperature and relative humidity readings for separate tires 103 of the vehicle 100, then the road condition prediction system 206 can apply the road condition model 216 to each set or pair in order to make separate predictions about the road conditions for the vehicle 100. The separate predictions could then be reconciled or compared with each other to improve the accuracy of the prediction. For example, if there were a disagreement between the predictions based on readings provided by separate tire sensors 106, the most frequent or majority prediction might be used (e.g., in order to ignore faulty or erroneous readings from defective or damaged tire sensors 106).

Proceeding to block 309, the road condition prediction system 206 can return the prediction for the current road condition of the vehicle 100 to the control system 203 of the vehicle 100. The control system 203 of the vehicle 100 can then use the current road condition in various manners, such as those previously described.

In the present disclosure, disjunctive language such as the phrase "at least one of X, Y, or Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

It should be emphasized that the above-described embodiments of the present disclosure are merely possible examples of implementations set forth for a clear understanding of the principles of the disclosure.

## Claims

1. A method comprising:
receiving ambient temperature and relative humidity data from a vehicle (100), the ambient temperature and relative humidity data having been collected by a tire sensor (106) mounted to an exterior of a tire (103) of the vehicle or an exterior of a wheel of the vehicle (100);
applying a machine-learning model to the temperature and humidity data from the vehicle (100) to predict a road condition for the vehicle; and
sending the road condition for the vehicle to a control system (203) of the vehicle.

2. The method of claim 1, further comprising training the machine-learning model to predict the road condition for the vehicle based at least in part on historic weather data that includes a relationship between temperature, relative humidity, and weather conditions.

3. The method of claim 1 or 2, wherein the control system (203) is configured to calculate a predicted wear level for the tire (103) of the vehicle (100); and/or wherein the control system (203) is configured to calculate a current coefficient of friction for a road based at least in part on the road condition.

4. The method of claim 3, wherein the control system (203) is further configured to adjust an operation of an antilock brake system (ABS) of the vehicle (100) based at least in part on the current coefficient of friction; and/or wherein the control system (203) is further configured to adjust an operation of a traction control system (TCS) of the vehicle (100) based at least in part on the current coefficient of friction.

5. The method of at least of the previous claims, wherein the control system (203) is further configured to activate a brake drying system of the vehicle (100) based at least in part on the road condition for the vehicle.

6. A system comprising:
a computing device comprising a processor and a memory; and
machine-readable instructions stored in the memory that, when executed by the processor, cause the computing device to at least:
receive ambient temperature and relative humidity data from a vehicle (100), the ambient temperature and relative humidity data having been collected by a tire sensor (106) mounted to an exterior of a tire (103) of the vehicle (100) or an exterior of a wheel of the vehicle (100);
apply a machine-learning model to the temperature and humidity data from the vehicle (100) to predict a road condition for the vehicle; and
send the road condition for the vehicle to a control system (203) of the vehicle.

7. The system of claim 6, wherein the machine-readable instructions, when executed by the processor, further cause the computing device to at least:
train the machine-learning model to predict the road condition for the vehicle based at least in part on historic weather data that includes a relationship between temperature, relative humidity, and weather conditions.

8. The system of claim 6 or 7, wherein the control system (203) is configured to calculate a predicted wear level for the tire (103) of the vehicle; and/or wherein the control system (203) is configured to calculate a current coefficient of friction for a road based at least in part on the road condition.

9. The system of at least one of the claims 6 to 8, wherein the control system (203) is further configured to adjust an operation of an antilock brake system (ABS) of the vehicle (100) based at least in part on the current coefficient of friction; and/or wherein the control system (203) is further configured to adjust an operation of a traction control system (TCS) of the vehicle (100) based at least in part on the current coefficient of friction.

10. The system of at least one of the claims 6 to 9, wherein the control system (203) is further configured to activate a brake drying system of the vehicle (100) based at least in part on the road condition for the vehicle.

11. A non-transitory, computer-readable medium comprising machine-readable instruct-tions that, when executed by a processor of a computing device, cause the computing device to at least:
receive ambient temperature and relative humidity data from a vehicle (100), the ambient temperature and relative humidity data having been collected by a tire sensor (106) mounted to an exterior of a tire (103) of the vehicle or an exterior of a wheel of the vehicle;
apply a machine-learning model to the temperature and humidity data from the vehicle (100) to predict a road condition for the vehicle; and
send the road condition for the vehicle to a control system (203) of the vehicle.

12. The non-transitory, computer-readable medium of claim 11, wherein the machine-readable instructions, when executed by the processor, further cause the computing device to at least:
train the machine-learning model to predict the road condition for the vehicle (100) based at least in part on historic weather data that includes a relationship between temperature, relative humidity, and weather conditions.

13. The non-transitory, computer-readable medium of claim 11 or 12, wherein the control system (203) is configured to calculate a predicted wear level for the tire (103) of the vehicle (100); and/or wherein the control system (203) is configured to calculate a current coefficient of friction for a road based at least in part on the road condition.

14. The non-transitory, computer-readable medium of at least one of the claims 11 to 13, wherein the control system is further configured to adjust an operation of an antilock brake system (ABS) of the vehicle (100) based at least in part on the current coefficient of friction; and/or wherein the control system is further configured to adjust an operation of a traction control system (TCS) of the vehicle (100) based at least in part on the current coefficient of friction.
